# EUROPEAN PATENT SPECIFICATION

(11) **EP 1 969 920 B1**
(45) Date of publication and mention of the grant of the patent: **06.05.2015**
(21) Application number: 08004583.4
(22) Date of filing: 12.03.2008
(51) Int. Cl.: A01G 9/10

(54) **Organic fiber sowing vessels and pots for seedlings and plants and making method therefor**
Gefäße und Pflanztöpfe aus organischen Fasern für Setzlinge und Pflanzen sowie Verfahren zu deren Herstellung
Récipients et pots de semis en fibre organique pour les semis et plantes, et leur procédé de fabrication

(30) Priority: 16.03.2007 IT MI20070527
(43) Date of publication of application: 17.09.2008
(73) Proprietor: Sadepan Chimica S.r.l., 46019 Viadana (Mantova) (IT)
(72) Inventor: Bargiacchi, Enrica, 57016 Rosignano Marittimo Fraz. Castiglioncello Livorno (IT); Bertola, Roberto, 46019 Viadana Mantova (IT); Costa, Gianluca, 26040 Gussola Cremona (IT); Malagarrica, Julio, 46019 Viadana Mantova (IT); Miele, Sergio, 56123 Pistoia (IT)
(74) Representative: Cicogna, Franco

(56) References cited:
- EP-A- 1 685 760
- GB-A- 831 622
- US-A- 3 174 940
- US-A- 4 047 329

## Description

### BACKGROUND OF THE INVENTION

The present invention relates to organic organic-fiber sowing vessels and pots for seedlings and plants, and also relates to a method for making said vessels and pots.

More specifically, the present invention relates to seedling and plant sowing vessels and pots, made of a biodegradable and not phytotoxic material, to which other components to be used as a substrate vessel for gamically and agamically propagating plants can be added.

As is known, a gamically propagating plant is a plant which is propagated sexually or through plant seeds, whereas an agamically propagating plant is a plant which is propagated through different vegetative members, such as stolons, sets, rhizomes, bulbs and so on.

Several agricultural cultivations are sown, or transplanted, or directly planted in a field, whereas other cultivations are sown or transplanted or planted at first in a protected environment, where they remain for a first portion of their growing cycle, up to a bedder or seedling stage, to be then bedded in a field or a greenhouse, where the plant will complete his growing cycle.

Modern breeding or farming methods provide to sow seeds or planting plant vegetative parts in a suitable germination substrate, for seeds, or a rooting substrate, for vegetative parts.

Such a substrate is arranged in suitable vessels, the so-called "sowing vessels" or "sowing trays", including a plurality of lucula or wells, having different sizes and shapes, where the substrate is arranged.

Thus, as the bedding operation is carried out, each seedling will have a small substrate "bread", for growing therein the most part of the tiny radical apparatus.

Consequently, the latter will not be subject to traumatic stresses, upon transplanting, and will be able of quickly recovering its growth, upon transferring the seedling or plant to its ultimate growing plates, that is either a growing field or a greenhouse.

Prior sowing trays are conventionally made of plastics material, such as polyethylene, or composite materials, such as paper materials, or of a plasticized or waxed or multilayered type, and/or made of a textile fiber and plastic material compounds.

In particular, foamed polystyrene sowing trays, which represent a broadly diffused type of sowing vessel, have the advantage of a comparatively high lightness and suitability for breeding systems either on a "floor support" or on a "bench support", that is said sowing trays are directly arranged on the germinating greenhouse floor, or in raised vats, similar to the well known working "benches" and being herein sprinkled with water from the top, or by a so-called "float system" sprinkling arrangement.

The words "float system" means herein, and as it is well known, a system for growing seedlings, where the polystyrene sowing trays are caused to float in a water or nourishing solution filled vat.

Thus, the seedlings, upon sprouting, will tend to drive their radicles from the substrate held in the mentioned luculum or well to the liquid medium, therefrom they will take water and other nourishing elements.

Notwithstanding the above mentioned advantages, prior plastics material sowing trays and vessels, and, in particular, polystyrene sowing trays, are affected by a lot of drawbacks.

In fact, for phytosanitary reasons, because they are susceptible to convey fungin and bacterial disease inocula, they must be renewed at the end of each growing cycle; to achieve this used sowing trays will be sent to thermaldestruction systems or to dumps, since they, in their used status, represent a special type of waste contaminated by residues of plant protection products.

Actually, attempts to sanitize used sowing trays by using disinfectant vapors or solutions, involve a lot of operating difficulties since such a sanitizing operation would be negatively affected by the volumes and shapes of the sowing trays; moreover, this situation is further aggravated by further problems deriving from processing operations performed on said sowing trays, such as bendings, breakages, an increase of the brittleness of their material, and so on.

Thus, in addition to the problems and expenses related to a disposal of prior used sowing trays or vessels and pots, a further problem is that deriving from their use for providing industrial cultivation plants, as transplanted in outside fields, such as tomatoes, melons, tobaccos and so on.

Thus, for such a cultivation, the sowing trays, upon transplanting the plants held thereby, are conventionally left at the edge part of the field, and this would require to perform a subsequent expensive collecting operation, and convey used trays to corporate places to be disposed of.

In this connection it should be pointed out that the number of sowing trays conventionally used for a surface of an hectare, varies from 150 and 250, depending on the vegetable species being processed, each tray with an average size from 0.008 and 0.012 m³ and a density of 19 + 30 kg/m³.

Documents EP 1 685 760 A1, US 3 174 940 A, GB 831 622 A and US 4 047 329 all disclose a sowing vessel and pot for seedling and plants, the sowing vessel and pot being made of a fully biodegradable material and a method for making such a sowing vessel/pot for seedlings and plants, comprising the steps of using an organic fiber and methylen-urea or methylol-urea, all the prior methods mixing the different components in a first step and molding the mixture under heat and pressure in a second step.

### SUMMARY OF THE INVENTION

Accordingly, the aim of the present invention is to provide a method for making sowing vessels or trays or pots, for seedlings and plants adapted to overcome the above mentioned problems affecting the prior art and related to the requirement of disposing of, by thermo-destructive or other disposal of methods, conventional trays, while eliminating other problems and expenses related to their handling at the end of their technical-agricultural period of life, that is in a post-servicing stage.

Within the scope of the above mentioned aim, a main object of the invention is to provide a method for making a sowing vessel or tray, or pot, for seedlings and plants, which is of a biodegradable nature and can be made with individual lucula of any desired configuration and size.

Another object is to provide such method for making a seedling and plant sowing tray and vessel-pot, overcoming any problems related to post-service handling such as collecting and conveying problems, to collect and convey used trays to a disposal of place or to thermally destruct or reuse them after a sanitizing operation, as possible.

According to one aspect of the present invention, the above mentioned aim and objects, as well as yet other objects, which will become more apparent hereinafter, are achieved by a method for making biodegradable sowing vessels or trays and pots, according to claim 1.

As is known, methylen-urea is a condensation product of urea and formic aldehyde, if its making reaction is carried out in an acid medium, while methylol-urea is a condensation product of urea and formic aldehyde if its making reaction is carried out in an alkaline medium.

Condensation methods for both reactions are well known from several years.

Each luculum or well represents for each seedling and plant, an organic substance source, whereas methylen-urea and/or methylol-urea represent a slow releasing nitrogen source.

The thus made sowing vessel or tray can further comprise both mineral and organic components.

As mineral components, it is possible to use: mineral fertilizer, in particular methylen-urea in powder form, zeolites, rock wool, pozzolan, pumice, clay minerals, vermiculite, perlite, foamed clay, bentonite and their mixtures in any desired rate.

As organic components, it is possible to use: vegetal meals, starches, natural and artificial textile fibers, sawdust, wood fibers and powders, as well as panel industry by products, papermill by products, paper processing waste, coconut fibers, jute fibers, kenaf fibers, barks, cork, cereal straw, rice and other cereal husks, sunflower seed shells, bagasse, peat, wood waste and mixtures thereof, in all desired rates.

One of the preferred embodiments, comprises a parallelepipedal sowing vessel or tray, having a size of 600 mm (length) x up to 400 mm (width) x up to 160 mm (height) with a luculum or well number from 1 to 680 (34 x 20).

The luculum or well number depends on agronomic requirements of the vegetal species to be cultivated in the trays and vessels according to the invention.

For that same reason, the lucula or wells can have either an opened or closed front, including a plurality of different size holes, depending on agronomic requirements of the vegetal species being cultivated and the breeding procedure thereof.

A second embodiment comprises a sowing vessel in the form of a sowing tray with raised or elevated peripheral rims, without separating elements which, in previous embodiment, separated the inside space of the lucula or wells. In this embodiment, the tray size varies up to 600 mm (length) x up to 400 mm (width) x up to 160 mm (outer height) and up to 145 mm (inner height as measured within the tray). Even in this embodiment it is possible to either provide or not holes through the bottom of the tray.

Finally, a third embodiment comprises a flat tray, without peripheral raised or elevated rims, thereon is merely arranged or supported the cultivation sublayer, having preferably a size up to 600 mm (length) x up to 400 mm (width) x up to 160 mm (height).

In this embodiment too it is possible to either provide or not holes through the bottom portion of the tray.

The sowing vessels and pots according to the present invention provide a plurality of advantages with respect to prior art.

At first, a use of a fully biodegradable material sowing vessel or pot, prevents problems related to their post-use managing, such as: collecting, handling and sending to dumps, or related to their thermal destruction or reuse after sanitizing, as possible.

The organic fiber sowing vessels according to the invention, in addition to being biodegradable, provide, in their post-use period, a very important function, since they are partially constituted by a fertilizer which slowly releases nitrogen, with a great advantage from the cultivation standpoint, whereas the organic part (fiber) provides an organic amendment and fertilizer function.

Optionally included co-formulating mineral or organic arrays will integrate the methylen-urea activity, due to their complementary fertilizing and/or amendment action.

In particular, the sowing vessels and pots according to the present invention, allow to greatly simply and fully automatize the transplantation operations, since they must not be maintained in an undamaged condition, but can also be broken into pieces, directly on the cultivation field, and distributed through the soil, as a conventional nitrogenous fertilizer.

For further illustrating the present invention, non limitative examples are hereinbelow disclosed, which should not be considered as exhaustive of the inventive scope.

All the disclosed examples, in particular, are referred to 1000 g dry fiber, independently from the number of sowing vessels which can be made by using such an amount of fibers.

### Example 1

1000 g of recycled cellulose, as preliminarily washed, are water pulped in a pulper device to provide a 3 % dry material pulp, for a total of 33333.3 g pulp.

This dispersion is spread on a perforated belt, thereon sowing vessels or pots having desired configurations are made.

On the moving belt, the 3 % pulp material loses water to provide an intermediate product including about 30 % residual water (corresponding to about 70 % cellulose) for a total of 1428.6 g.

Then, with the belt being continuously driven, methylen-urea is added by using a nozzle or slot film coater.

The methylen-urea herein used has a molar ratio U:F = 1:0.5 and a dry residue of 60 % and being catalyzed, just before use, with 20 % phosphoric acid. The used ratios are as follows: 100 g liquid methylen-urea and 2 g solution phosphoric acid.

500 g of the above catalyzed mixture are sprayed on 1428.6 g of the process intermediate product, at 70 % cellulose.

Immediately after the resin binding operation, the belt is caused to pass through a 150°C oven, where catalyzed methylen-urea is dried, and cellulose further loosing water to provide an end product including 5 % total residue moisture, for a total weight of 1364.3 g.

The thus made articles or manufacture are light, resistant to impacts, perfectly rigid and contain 8.7 % total nitrogen, of which 7.8 % is a slowly released nitrogen, whereas the remaining 0.9 % is constituted by ureic nitrogen.

### Example 2

1000 g virgin cellulose are water pulped in a pulper device to provide a 3 % dry material pulp, for a total of 33333.3 g pulp.

This dispersion is spread on a perforated belt, thereon sowing vessels and pots are formed in any desired configurations and size.

On the moving belt, 3 % dry material pulp loses water to provide an intermediate product including about 30 % residue water (corresponding to about 70 % cellulose), for a total of 1428.6 g.

Then, with the belt being continuously driven, methylol-urea is added by using a nozzle or slot film coater apparatus.

The herein used methylol-urea has a molar ratio U:F = 1:0.7 and a dry residue of 70 % and is catalyzed just before its use, by using a 15% ammonium phosphate (MAP) solution. The ratios are as follows: 100 g liquid methylen-urea and 10 g solution phosphate ammonium.

700 g of the above catalyzed mixture are sprayed on 1428.6 g of the process intermediated product at 70 % cellulose.

Immediately after the resin binding operation, the belt is caused to pass through a 170°C oven, where said catalyzed methylol-urea is dried and cellulose further loses water to provide an end product including 7 % total residue moisture, for a total weight of 1540.5 g.

The thus made articles of manufacture are light, resistant to impacts, perfectly rigid and contain 10.0 % total nitrogen, of which 8.5 % is constituted by a slowly released nitrogen, whereas the remaining 1.5 % is constituted by ureic nitrogen.

### Example 3

1000 g recycled cellulose, as suitably washed, are water pulped in a pulper device to provide a 3 % dry material pulp, for a total of 33333.3 g pulp.

This dispersion is spread on a perforated belt, thereon the sowing vessels and pots to be made are formed to any desired configurations and size.

On said movable belt, the 3 % dry material pulp loses water to provide an intermediate product including about 30 % residue water (corresponding to about 70 % cellulose), for a total of 1428.6 g.

Then, with the belt being continuously driven, said methylen-urea is added by using a nozzle or slot film coater apparatus.

The herein used methylen-urea has a molar U:F = 1:1.0 ratio and 65% dry material contents and being catalyzed, just before use, by 35 % ammonium phosphate. The ratios are as follows: 100 g liquid ureic resin and 8 g solution ammonium sulphate.

300 g of the above catalyzed mixture are sprayed on 1428.6 g of the processing intermediate product at 70 % cellulose.

Immediately after the resin binding operation, the belt is caused to pass through a 160°C oven, where said catalyzed methylen-urea is dried and cellulose further loses water to provide an end product including 2 % total residue moisture, for a total weight of 1212.6 g.

The thus made articles of manufacture are light, resistant to impacts, perfectly rigid and contain 5.5 % total nitrogen fully constituted by slowly released nitrogen.

### Example 4

According to the method disclosed in Example 1, wood waste (N = 12 %) is herein used instead of cellulose for making a sowing vessel or pot which, in this embodiment, has a total nitrogen contents of 17.5 %, of which 8.8 % is constituted by organic nitrogen, 7.8 % by a slowly released nitrogen, and the remaining 0.9 % by ureic nitrogen.

### Example 5

According to the method disclosed in Example 3, is herein used a (N = 12 %) bark fiber for making a sowing vessel or pot having characteristics corresponding to those achieved starting from a cellulose fiber material.

### Example 6

1000 g jute cloth or fabric are water pulped in a pulper apparatus.

The above dispersion is spread on a perforated belt, thereon the sowing vessels and pots to be made are formed to any desired configurations and size.

On the moving belt, said pulp loses water to provide an intermediate product including about 40 % residue water (corresponding to about 60 % jute cloth material), for a total of 1666.6 g.

Then, with the belt being continuously driven, methylen-urea is added by using a nozzle or slot film coater apparatus.

The herein used methylen-urea has a molar U:F = 1:0.6 and a dry residue of 70 %, and is mixed, just before use, with 35 % phosphoric acid. The operating ratios or rates are as follows: 100 g liquid methylen-urea and 3 g solution phosphoric acid.

200 g of the above catalyzed mixture are sprayed on the 1666.6 g processing intermediate product at 60 % jute cloth material.

Immediately after the resin binding operation, the belt is caused to pass through a 150°C oven, where said catalyzed resin is dried, and jute further lose water to provide an end product including 2 % total residue moisture, for a total weight of 1161.2 g.

The thus made end articles of manufacture are light, resistant to impacts, perfectly rigid and contain 4.0 % total nitrogen, of which 3.6 % is constituted by a slowly released nitrogen and the remaining 0.4 % by ureic nitrogen

### Example 7

1,000 g recycled cellulose, as properly washed, are water pulped in a pulper apparatus to provide a 1 % dry material pulp, for a total of 100,000 g dispersion.

To this dispersion is added, directly from the dispersion, said methylen-urea.

With a continuously operated processing system, the methylen-urea is also continuously added.

The herein used methylen-urea has a molar ratio U:F=1:0.6 and a dry residue of 65% and being catalyzed, just before use, by 35% sulphate ammonium.

The operating ratios are 100 g liquid methylen-urea and 2 g solution ammonium sulphate.

For 1,000 g dry fiber, 1,333.3 g liquid methylen-urea are added.

Immediately after this addition, a mold is used for forming the subject article of manufacture, comprising the sowing vessel or any other desired sowing pot or vat.

The belt with the removed from the mold article of manufacture arranged thereon, is caused to pass through a 160°C oven, where said catalyzed methylen-urea is dried and cellulose further loses water to provide an end product including 5 % total residue moisture, for a total weight of 1,300 g.

In this connection, it should be apparent that the end weight will depend on the fact that only a portion of the added methylen-urea will remain on the fiber material, the remaining portion going to solution.

The thus made end articles of manufacture are light, resistant to impacts, perfectly rigid and contain 6 % total nitrogen, of which 5.8% constituted by slowly released nitrogen, whereas the remaining 0.2% is constituted by ureic nitrogen.

60% total nitrogen, corresponding to 3.6%, is soluble in hot water, according to the fertilizer material activity index method.

### Example 8

1,000 g recycled cellulose, as properly washed, are water pulped in a pulper apparatus to provide a 1 % dry material pulp, for a total of 100,000 g of paste.

To this dispersion methylol-urea is directly added in said paste.

With the paste being continuously added, even said methylol-urea is continuously added.

The herein used methylol-urea has a molar ratio U:F=1:0.7 and a dry residue of 85% and is catalyzed just before use, by using 35% ammonium sulphate. The operating ratios correspond to 100 g liquid methylol-urea and 1 g solution ammonium sulphate.

For 1,000 g dry fiber, 1,500 g liquid methylol-urea are added.

Immediately after, by using a suitable mold, the herein desired articles of manufacture, comprising a sowing vessel or any other sowing pan or vat, are made.

The article of manufacture supporting belt, which supports the from the mold removed articles, is caused to pass through a 130°C oven, where the catalyzed methylol-urea is dried and cellulose further loses water to provide an end product including 6% total residue moisture, for a total weight of 1,250 g.

In this connection, it should be apparent that the end weight will depend on the fact that only a part of the added methylol-urea will remain on the fiber material, the remaining part going to solution.

The thus made end articles of manufacture are light, resistant to impacts, perfectly rigid and contain 5% total nitrogen, of which 4.9% is a slowly released nitrogen, whereas the remaining 0.1% is ureic nitrogen.

80% total nitrogen, i.e. 4.0% thereof, is soluble in hot water, according to the fertilizer activity index method.

It has been found that the invention fully achieves the intended aim and objects.

In fact, the invention provides sowing vessels and pots or vats, for growing seedlings or plants in general, which vessels are fully made of a biodegradable material, thereby eliminating all problems related to their post-use managing such as: collecting, handling and sending to a disposal-of place, or for sending them to thermally destruction systems or for being optionally reused as possible.

The thus made sowing vessels and pots provide the possibility of simply making, in a fully mechanized manner, all the required transplantation operations, since said vessels must not be necessary maintained in an undamaged condition, but can also be broken into pieces directly on the field and spread on the soil, as a convention fertilizer.

In practicing the invention, the used materials, together with the contingent size and shapes, can be any, depending on requirements and the status of the art.

## Claims

1. A method for making a sowing vessel for seedlings and plants, **characterized in that** said method comprises at least the steps of providing an organic fiber and water pulping said organic fiber to provide a water dispersion pulp having a dry material set rate, spreading said water dispersion pulp on a movable perforated belt to cause said water dispersion pulp to release a first set water amount, continuously driving said perforated belt while coating or depositing on said water dispersion pulp on said continuously driven perforated belt a methylen urea and/or methylol urea condensation product, causing said perforated belt to immediately pass, after said coating, through a set heating temperature heating oven to cause said water dispersion pulp to further release a second set water amount thereby providing a plurality of light, resistant to impact, rigid sowing vessels, containing a set amount of total nitrogen, either all in the form of a slowly releasable nitrogen or in the form of a combined slowly releasable nitrogen and ureic nitrogen.

2. A method according to claim 1, **characterized in that** said organic fiber is recycled cellulose, said recycled cellulose being preliminarily washed, and water pulped in a pulper device to provide a 3% dry material pulp dispersion, said pulp dispersion being spread on a moving perforated belt, thereon sowing vessels having a desired configuration are to be made, on said moving perforated belt, said pulp dispersion loosing water to provide an intermediate product including about 30% residual water, continuously driving said movable perforated belt while adding thereto methylen-urea by using a nozzle or slot film coater, said methylen-urea having a U:F = 1:0.5 molar ratio and a dry residue of 60% and being catalyzed, just before use, with 20% phosphoric acid, in ratio of 100 g liquid methylen-urea and 2 g phosphoric acid solution, to provide a catalyzed mixture, a portion of said catalyzed mixture being sprayed on said intermediate product, immediately after said coating or depositing operation, said movable perforated belt being caused to pass through a 150°C oven, to dry the catalyzed methylen-urea, thereby said cellulose water dispersion further looses water to provide an end product including 5% total residue moisture, thereby providing a plurality of light, resistant to impact, rigid vessel containing 8.7% total nitrogen, of which 7.8% is a slowly releasable nitrogen, whereas the remaining 0.9% is constituted by ureic nitrogen.

3. A method according to claims 1 and 2, **characterized in that** said organic fiber comprises virgin cellulose, said virgin cellulose fiber being water pulped in a pulper device to provide a 3% dry material pulp water dispersion, said dispersion being spread on a movable perforated belt, thereon said sowing vessels are to be formed to any desired configurations and size, on said moving perforated belt said water dispersion pulp losing such an amount of water to provide an intermediate product including about 30% residue water, said belt being further continuously driven while adding thereto methylol-urea by using a nozzle or slot film coater apparatus, said methylol-urea having a molar ratio U:F = 1:0.7 and a 70% dry residue and being catalyzed just before its use, by using a 15% ammonium phosphate (MAP) solution, in a ratio of 100 g liquid methylol-urea and 10 g ammonium phosphate solution, to provide a catalyzed mixture, an amount of said catalyzed mixture being sprayed on said intermediated product, immediately after the coating, said movable perfotated belt being caused to pass through a 170°C oven, where said catalyzed methylol-urea is dried thereby causing said cellulose fiber pulp to further loose water to provide an end product including 7% total moisture residue amount, thereby providing a plurality of light, resistant to impacts, rigid vessels containing 10.0% total nitrogen, of which 8.5% is constituted by a slowly released nitrogen, whereas the remaining 1.5% is constituted by ureic nitrogen.

4. A method according to claim 1, **characterized in that** said organic fiber comprises recycled cellulose, said recycled cellulose being washed and water pulped in a pulper device to provide a 3% dry material water dispersion pulp, said pulp being spread on a movable perforated belt, thereon said sowing vessels must be made to any desired configurations and size, on said movable perforated belt, said pulp dispersion loosing water to provide an intermediate product including about 30% residue water, continuously driving said perforated belt while coating thereon methylen-urea using a nozzle or slot film coater apparatus, said methylen urea having a U:F = 1:1.0 molar ratio, and a 65% dry material contents and being catalyzed, just before use, by 35% ammonium phosphate, in a ratio of 100 g liquid methylen-urea and 8 g ammonium sulphate solution, to provide a catalyzed mixture, an amount of said catalyzed mixture being sprayed on said intermediate product at 70% cellulose, immediately after said coating, said perforated belt being caused to pass through a 160°C oven, where said catalyzed methylen-urea is dried and said cellulose pulp further looses water to provide an end product including 2% total residue moisture, said end product including a plurality of said light, resistant to impacts, rigid vessels each containing 5.5% total nitrogen fully constituted by slowly releasable nitrogen.

5. A method according to claim 1, **characterized in that** said organic fiber is wood waste, said wood waste providing, as processed by a method according to the preceding claims, a sowing vessel having a total nitrogen contents of 17.5% of which 8.8% is constituted by organic nitrogen, 7.8% by a slowly releasable nitrogen, and the remaining 0.9% by ureic nitrogen.

6. A method according to claim 1, **characterized in that** said organic fiber is a bark fiber.

7. A method according to claim 1, **characterized in that** said organic fiber is a jute fabric fiber, said fiber being water pulped in a pulper apparatus, to provide a water dispersion pulp, said water dispersion pulp being spread on a perforated belt, thereon said sowing vessels are to be made, on said movable perforated, said pulp loosing water to provide an intermediate product including about 40% residue water, corresponding to about 60% jute cloth fabric, continuously driving said movable perforated belt while coating thereon methylen-urea by using a nozzle or slot film coater apparatus, said methylen-urea having a U:F = 1:0.6 molar ratio and a dry residue of 70%, and being mixed, just before use, with 35% phosphoric acid in a ratio of 100 g liquid methylen-urea and 3 g phosphoric acid solution, to provide a catalyzed mixture, said catalyzed mixture being sprayed on said intermediate product, immediately after said spraying or coating, said belt being caused to pass through a 150°C oven, where said pulp is further dried, thereby further loosing water to provide an end product including a 2% total residue moisture contents, thereby providing light, resistant to impacts, rigid sowing vessels containing 4.0% total nitrogen, of which 3.6% is constituted by a slowly releasable nitrogen and the remaining is constituted by 0.4% ureic nitrogen.

8. A sowing vessel made by a method according to one or more of claims 1 to 7, **characterized in that** the sowing vessel is provided by said perforated belt which comprises a plurality of perforations shaped and sized such that the sowing vessel has a parallelepiped configuration, of the size up to 600 mm in length, x up to 400 mm in width, x up to 160 mm in height, with a lucula or well number from 1 to 680 (34 x 20), said lucula having either a closed or open front portion and a plurality of different size through holes.

9. A sowing vessel according to claim 8, **characterized in that** the sowing vessel is provided by said perforated belt which comprises a plurality of perforations shaped and sized such that the sowing vessel has a tray configuration including raised peripheral rims, without inner separating elements, said sowing vessels having a size up to 600 mm in length, x up to 400 mm in width, x up to 160 mm in outer height, and up to 145 mm in inner height, the bottom portions of said sowing vessels being either or not provided with throughgoing holes.

10. A sowing vessel, according to claim 8, **characterized in that** the sowing vessel is provided by said perforated belt which comprises a plurality of perforations shaped and sized such that the sowing vessel has a flat tray configuration, without peripheral raised edges, thereon a cultivation sublayer is supported, said sowing vessels having a size up to 600 mm in length, x up to 400 mm in width, x up to 160 mm in height and a bottom portion either including or not including throughgoing holes.

11. A method according to any of the claims 1 to 7, **characterized in that** said methylen-urea and/or methylol-urea is added to the finished said vessel by using a nozzle film coater apparatus.

12. A sowing vessel for seedlings and plants, according to claims 8 to 10, **characterized in that** said sowing vessel is a flower pot.

## Patentansprüche

1. Verfahren zum Herstellen eines Aussaatgefäßes für Setzlinge und Pflanzen, **dadurch gekennzeichnet, dass** das Verfahren mindestens die Schritte des Bereitstellens einer organischen Faser und des Pulpens der organischen Faser in Wasser umfasst, um eine Wasserdispersionspulpe bereit zu stellen, die einen festgelegten Trockenmaterialanteil aufweist, des Ausbreitens der Wasserdispersionspulpe auf einem beweglichen perforierten Band, damit die Wasserdispersionspulpe eine erste festgelegte Menge an Wasser freisetzt, des kontinuierlichen Antreibens des perforierten Bandes während des Beschichtens oder Ablagerns eines Methylenharnstoff- und/oder Methylolharnstoff-Kondensationsprodukts auf der Wasserdispersionspulpe auf dem kontinuierlich angetriebenen Band, des Herbeiführens des unmittelbaren Durchgangs des perforierten Bandes nach dem Beschichten durch einen Heizofen mit festgelegter Heiztemperatur, damit die Wasserdispersionspulpe ferner eine zweite festgelegte Menge an Wasser freisetzt, wodurch eine Vielzahl leichter, stoßresistenter, starrer Aussaatgefäße bereitgestellt wird, die eine festgelegte Menge an Gesamtstickstoff enthalten, entweder sämtlich in der Form eines langsam freisetzbaren Stickstoffs oder in der Form einer Kombination von langsam freisetzbarem Stickstoff und Carbamidstickstoff.

2. Verfahren nach Anspruch 1, **dadurch gekennzeichnet, dass** die organische Faser wiederaufbereitete Cellulose ist, wobei die wiederaufbereitete Cellulose zunächst gewaschen und in einer Pulpvorrichtung in Wasser zermalmt wird zum Bereitstellen einer 3 % Trockenmaterial-Pulpendispersion, wobei die Pulpendispersion auf einem beweglichen perforierten Band ausgebreitet wird, auf dem Aussaatgefäße hergestellt werden sollen, die eine gewünschte Ausgestaltung aufweisen, wobei die Pulpendispersion auf dem beweglichen Band Wasser verliert, wodurch ein Zwischenprodukt bereitgestellt wird, das etwa 30 % Wasserrückstand aufweist, das bewegliche perforierte Band kontinuierlich angetrieben wird während Methylenharnstoff zugegeben wird unter Verwendung eines Düsen- oder eines Schlitz-Filmbeschichters, wobei der Methylenharnstoff ein Molverhältnis von U:F = 1:0,5 und einen Trockenrückstand von 60 % aufweist und unmittelbar vor der Verwendung mit 20 % Phosphorsäure katalysiert wird im Verhältnis 100 g flüssiger Methylenharnstoff und 2 g Phosphorsäurelösung zum Bereitstellen eines katalysierten Gemischs, wobei ein Teil des katalysierten Gemischs auf das Zwischenprodukt gesprüht wird, wobei das bewegliche perforierte Band unmittelbar nach dem Beschichtungs- oder Ablagerungsvorgang einen 150 °C Ofen durchläuft, um den katalysierten Methylenharnstoff zu trocknen, wodurch die Cellulose-Wasserdispersion weiteres Wasser verliert, wodurch ein Endprodukt bereitgestellt wird, das 5 % Gesamtfeuchtigkeitsrückstand umfasst, wodurch eine Vielzahl von leichten, stoßresistenten, starren Gefäßen bereitgestellt wird, die 8,7 % Gesamtstickstoff enthalten, von denen 7,8 % langsam freisetzbarer Stickstoff sind, wohingegen die übrigen 0,9 % aus Carbamidstickstoff bestehen.

3. Verfahren nach Anspruch 1 und 2, **dadurch gekennzeichnet, dass** die organische Faser fabrikneue Cellulose umfasst, wobei die fabrikneue Cellulose in einer Pulpvorrichtung in Wasser zermalmt wird zum Bereitstellen einer 3 % Trockenmaterial-Pulpenwasserdispersion, wobei die Dispersion auf einem beweglichen perforierten Band ausgebreitet wird, auf dem Aussaatgefäße von jeder gewünschten Ausgestaltung und Größe hergestellt werden sollen, wobei die Pulpendispersion auf dem beweglichen Band eine solche Menge von Wasser verliert, dass ein Zwischenprodukt bereitgestellt wird, das etwa 30 % Wasserrückstand aufweist, das bewegliche perforierte Band kontinuierlich angetrieben wird während Methylolharnstoff zugegeben wird unter Verwendung eines Düsen- oder eines Schlitz-Filmbeschichterapparats, wobei der Methylolharnstoff ein Molverhältnis von U:F = 1:0,7 und einen Trockenrückstand von 70 % aufweist und unmittelbar vor seiner Verwendung mit Hilfe einer 15 % Ammoniumphosphat (MAP)-Lösung katalysiert wird im Verhältnis 100 g flüssiger Methylolharnstoff und 10 g Ammoniumphosphatlösung zum Bereitstellen eines katalysierten Gemischs, wobei ein Teil des katalysierten Gemischs auf das Zwischenprodukt gesprüht wird, wobei das bewegliche perforierte Band unmittelbar nach dem Beschichten einen 170 °C Ofen durchläuft, um den katalysierten Methylenharnstoff zu trocknen, wodurch die Cellulosefaserpulpe weiteres Wasser verliert, wodurch ein Endprodukt bereitgestellt wird, das 7 % Gesamtfeuchtigkeitsrückstand umfasst, wodurch eine Vielzahl von leichten, stoßresistenten, starren Gefäßen bereitgestellt wird, die 10,0 % Gesamtstickstoff enthalten, von denen 8,5 % aus langsam freisetzbarem Stickstoff bestehen, wohingegen die übrigen 1,5 % aus Carbamidstickstoff bestehen.

4. Verfahren nach Anspruch 1, **dadurch gekennzeichnet, dass** die organische Faser wiederaufbereitete Cellulose umfasst, wobei die wiederaufbereitete Cellulose gewaschen und in einer Pulpvorrichtung in Wasser zermalmt wird zum Bereitstellen einer 3 % Trockenmaterial-Wasserdispersionspulpe, wobei die Pulpe auf einem beweglichen perforierten Band ausgebreitet wird, auf dem die Aussaatgefäße in jeder gewünschten Ausgestaltung und Größe hergestellt werden müssen, wobei die Pulpendispersion auf dem beweglichen Band Wasser verliert, wodurch ein Zwischenprodukt bereitgestellt wird, das etwa 30 % Wasserrückstand aufweist, das bewegliche perforierte Band kontinuierlich angetrieben wird während darauf Methylenharnstoff beschichtet wird unter Verwendung eines Düsen- oder eines Schlitz-Filmbeschichterapparats, wobei der Methylenharnstoff ein Molverhältnis von U:F = 1:1,0 und einen Trockenmaterialgehalt von 65 % aufweist und unmittelbar vor der Verwendung mit 35 % Ammoniumphosphat katalysiert wird im Verhältnis 100 g flüssiger Methylenharnstoff und 8 g Ammoniumsulfalösung zum Bereitstellen eines katalysierten Gemischs, wobei ein Teil des katalysierten Gemischs auf das Zwischenprodukt mit 70 % Cellulose gesprüht wird, wobei das bewegliche perforierte Band unmittelbar nach dem Beschichten einen 160 °C Ofen durchläuft, wo der katalysierte Methylenharnstoff getrocknet wird und die Cellulosepulpe weiteres Wasser verliert, wodurch ein Endprodukt bereitgestellt wird, das 2 % Gesamtfeuchtigkeitsrückstand umfasst, wobei das Endprodukt eine Vielzahl der leichten, stoßresistenten, starren Gefäße umfasst, die jeweils 5,5 % Gesamtstickstoff enthalten, der vollständig aus langsam freisetzbarem Stickstoff besteht.

5. Verfahren nach Anspruch 1, **dadurch gekennzeichnet, dass** die organische Faser Holzabfall ist, wobei der Holzabfall durch Verarbeitung nach dem Verfahren eines der vorherigen Ansprüche ein Aussaatgefäß bereitstellt, das einen Gesamtstickstoffgehalt von 17,5 % aufweist, von denen 8,8 % aus organischem Stickstoff bestehen, 7,8 % aus langsam freisetzbarem Stickstoff und die übrigen 0,9 % aus Carbamidstickstoff.

6. Verfahren nach Anspruch 1, **dadurch gekennzeichnet, dass** die organische Faser eine Rindenfaser ist.

7. Verfahren nach Anspruch 1, **dadurch gekennzeichnet, dass** die organische Faser eine Faser aus Jutegewebe ist, wobei die Faser in einem Pulpapparat in Wasser zermalmt wird zum Bereitstellen einer Wasserdispersionspulpe, wobei die Wasserdispersionspulpe auf einem beweglichen perforierten Band ausgebreitet wird, auf dem die Aussaatgefäße hergestellt werden sollen, wobei die Pulpendispersion auf dem beweglichen Band Wasser verliert, wodurch ein Zwischenprodukt bereitgestellt wird, das etwa 40 % Wasserrückstand aufweist, was etwa 60 % Jutestoffgewebe entspricht, das bewegliche perforierte Band kontinuierlich angetrieben wird während Methylenharnstoff darauf beschichtet wird unter Verwendung eines Düsen- oder eines Schlitz-Filmbeschichterapparats, wobei der Methylenharnstoff ein Molverhältnis von U:F = 1:0,6 und einen Trockenrückstand von 70 % aufweist und unmittelbar vor der Verwendung mit 35 % Phosphorsäure gemischt wird im Verhältnis 100 g flüssiger Methylenharnstoff und 3 g Phosphorsäurelösung zum Bereitstellen eines katalysierten Gemischs, wobei das katalysierte Gemisch auf das Zwischenprodukt gesprüht wird, wobei das bewegliche perforierte Band unmittelbar nach dem Sprühen oder Beschichten einen 150 °C Ofen durchläuft, wo die Pulpe weiter getrocknet wird, wodurch sie weiteres Wasser verliert, wodurch ein Endprodukt bereitgestellt wird, das 2 % Gesamtfeuchtigkeitsrückstand umfasst, wodurch leichte, stoßresistente, starre Aussaatgefäße bereitgestellt werden, die 4,0 % Gesamtstickstoff enthalten, von denen 3,6 % aus einem langsam freisetzbaren Stickstoff bestehen und der Rest aus 0,4 % Carbamidstickstoff besteht.

8. Aussaatgefäß hergestellt mit dem Verfahren nach einem oder mehreren der Ansprüche 1 bis 7, **dadurch gekennzeichnet, dass** das Aussaatgefäß durch das perforierte Band bereitgestellt wird, das eine Vielzahl von Perforierungen umfasst, die von einer Gestalt und Größe sind, dass das Aussaatgefäß eine Ausgestaltung eines Parallelepipeds aufweist, einer Größe von bis zu 600 mm Länge x bis zu 400 mm Breite x bis zu 160 mm Höhe, mit einer Lucula oder Muldenanzahl von 1 bis 680 (34 x 20), wobei die Lucula entweder einen geschlossenen oder offenen Vorderteil und eine Vielzahl von Durchgangsbohrungen verschiedener Größe aufweist.

9. Aussaatgefäß nach Anspruch 8, **dadurch gekennzeichnet, dass** das Aussaatgefäß durch das perforierte Band bereitgestellt wird, das eine Vielzahl von Perforierungen umfasst, die von einer Gestalt und Größe sind, dass das Aussaatgefäß die Gestalt einer Schale einschließlich aufgerichteter äußerer Ränder aufweist ohne innere Trennelemente, wobei die Aussaatgefäße eine Größe von bis zu 600 mm Länge x bis zu 400 mm Breite x bis zu 160 mm äußerer Höhe und bis zu 145 mm innerer Höhe aufweisen, wobei die Bodenpartien der Aussaatgefäße mit Durchgangsbohrungen versehen sind oder nicht.

10. Aussaatgefäß nach Anspruch 8, **dadurch gekennzeichnet, dass** das Aussaatgefäß durch das perforierte Band bereitgestellt wird, das eine Vielzahl von Perforierungen umfasst, die von einer Gestalt und Größe sind, dass das Aussaatgefäß die Gestalt einer flachen Schale ohne aufgerichtete äußere Ränder aufweist, worauf eine Kultivierungsunterschicht getragen wird, wobei die Aussaatgefäße eine Größe von bis zu 600 mm Länge x bis zu 400 mm Breite x bis zu 160 mm Höhe aufweisen und eine Bodenpartie, die Durchgangsbohrungen umfasst oder diese nicht umfasst.

11. Verfahren nach einem der Ansprüche 1 bis 7, **dadurch gekennzeichnet, dass** der Methylenharnstoff und/oder der Methylolharnstoff dem fertigen Gefäß unter Verwendung eines Düsen-Filmbeschichterapparats zugeführt wird.

12. Aussaatgefäß für Stecklinge und Pflanzen nach Anspruch 8 bis 10, **dadurch gekennzeichnet, dass** das Aussaatgefäß ein Blumentopf ist.

## Revendications

1. Procédé pour la fabrication d'un récipient de semis pour semis et plantes, **caractérisé en ce que** ledit procédé comprend au moins les étapes de fourniture d'une fibre organique et d'ajout d'eau à ladite fibre organique afin de créer une pâte de dispersion d'eau ayant un taux défini de matière sèche, en étalant ladite pâte de dispersion d'eau sur une courroie perforée mobile afin d'amener ladite pâte de dispersion d'eau à libérer une première quantité définie d'eau, en déplaçant continuellement ladite courroie perforée tout en recouvrant ou en déposant sur ladite pâte de dispersion d'eau qui se trouve sur ladite courroie perforée déplacée en continu un produit de condensation méthylène-urée et/ou méthylol-urée, provoquant le passage immédiat de ladite courroie perforée, après le dépôt, dans un four à une température définie, amenant ainsi la pâte de dispersion d'eau à libérer une seconde quantité définie d'eau, fournissant de ce fait plusieurs récipients semis rigides, légers et résistants aux impacts, contenant une quantité définie d'azote total, soit entièrement sous la forme d'azote à libération lente, soit sous la forme d'une combinaison d'azote à libération lente et d'azote uréique.

2. Procédé selon la revendication 1, **caractérisé en ce que** ladite fibre organique est de la cellulose recyclée, ladite cellulose recyclée étant préalablement lavée et mélangée à de l'eau dans un pulpeur afin de créer une pâte de dispersion à 3 % de matière sèche, ladite pâte de dispersion étant étalée sur une courroie perforée mobile, les récipients de semis ayant la configuration souhaitée doivent à ce moment-là être créés, sur ladite courroie perforée, ladite pâte de dispersion libérant de l'eau afin de fournir un produit intermédiaire comprenant environ 30 % d'eau résiduelle, en déplaçant continuellement ladite courroie perforée mobile tout en y ajoutant le méthylène-urée à l'aide d'un embout ou d'un applicateur, le méthylène-urée ayant un rapport molaire U:F de 1:0,5, un résidu sec de 60 % et étant catalysé juste avant utilisation avec de l'acide phosphorique à 20 % dans un ratio de 100 g de liquide méthylène-urée et 2 g de solution d'acide phosphorique, pour créer un mélange catalysé, une portion dudit mélange catalysé étant vaporisée sur le produit intermédiaire immédiatement après l'opération de dépôt, ladite courroie perforée mobile étant amenée à passer dans un four à 150 °C pour sécher le méthylène-urée catalysé, où ladite cellulose utilisée pour la dispersion d'eau libère à nouveau de l'eau pour fournir un produit final comprenant une humidité résiduelle totale de 5 %, fournissant de ce fait plusieurs récipients rigides, légers et résistants aux impacts, contenant 8,7 % d'azote total, parmi lesquels 7,8 % sont de l'azote à libération lente, tandis que les 0,9 % restant sont constitués d'azote uréique.

3. Procédé selon les revendications 1 et 2, **caractérisé en ce que** ladite fibre organique comprend de la cellulose vierge, ladite fibre de cellulose vierge étant mélangée à de l'eau dans un pulpeur afin de créer une pâte de dispersion à 3 % de matière sèche, ladite pâte de dispersion étant étalée sur une courroie perforée mobile, les récipients de semis doivent à ce moment-là être créés selon la configuration et la taille souhaitées, sur ladite courroie perforée, ladite pâte de dispersion libérant une certaine quantité d'eau afin de fournir un produit intermédiaire comprenant environ 30 % d'eau résiduelle, en déplaçant continuellement ladite courroie perforée mobile tout en y ajoutant le méthylol-urée à l'aide d'un embout ou d'un applicateur, le méthylol-urée ayant un rapport molaire U:F de 1:0,7, un résidu sec de 70 % et étant catalysé juste avant utilisation avec une solution de phosphate d'ammonium (MAP) à 15 % dans un ratio de 100 g de liquide méthylol-urée et 10 g de solution de phosphate d'ammonium, pour créer un mélange catalysé, une portion dudit mélange catalysé étant vaporisée sur le produit intermédiaire immédiatement après l'opération de dépôt, ladite courroie perforée mobile étant amenée à passer dans un four à 170 °C pour sécher le méthylol-urée catalysé, où ladite pâte de fibre de cellulose libère à nouveau de l'eau pour fournir un produit final comprenant une humidité résiduelle totale de 7 %, fournissant de ce fait plusieurs récipients rigides, légers et résistants aux impacts, contenant 10,0 % d'azote total, parmi lesquels 8,5 % sont de l'azote à libération lente, tandis que les 1,5 % restant sont constitués d'azote uréique.

4. Procédé selon la revendication 1, **caractérisé en ce que** ladite fibre organique comprend de la cellulose recyclée, ladite cellulose recyclée étant préalablement lavée et mélangée à de l'eau dans un pulpeur afin de créer une pâte de dispersion à 3 % de matière sèche, ladite pâte de dispersion étant étalée sur une courroie perforée mobile, les récipients de semis doivent à ce moment-là être créés selon la configuration et la taille souhaitées, sur ladite courroie perforée, ladite pâte de dispersion libérant de l'eau afin de fournir un produit intermédiaire comprenant environ 30 % d'eau résiduelle, en déplaçant continuellement ladite courroie perforée mobile tout en y ajoutant le méthylène-urée à l'aide d'un embout ou d'un applicateur, le méthylène-urée ayant un rapport molaire U:F de 1:1,0, un taux de matière sèche de 65 % et étant catalysé juste avant utilisation avec du phosphate d'ammonium à 35 % dans un ratio de 100 g de liquide méthylène-urée et 8 g de solution de sulfate d'ammonium, pour créer un mélange catalysé, une portion dudit mélange catalysé étant vaporisée sur le produit intermédiaire à 70 % de cellulose immédiatement après l'opération de dépôt, ladite courroie perforée mobile étant amenée à passer dans un four à 160 °C pour sécher le méthylène-urée catalysé et où ladite pâte de cellulose libère à nouveau de l'eau pour fournir un produit final comprenant une humidité résiduelle totale de 2 %, ledit produit final comprenant plusieurs récipients rigides, légers et résistants aux impacts, contenant chacun 5,5 % d'azote total, entièrement composés d'azote à libération lente.

5. Procédé selon la revendication 1, **caractérisé en ce que** la fibre organique est un déchet de bois, ledit déchet de bois fournissant, tel que fabriqué selon un procédé selon les revendications précédentes, un récipient de semis ayant une teneur en azote total de 17,5 %, parmi lesquels 8,8 % sont constitués d'azote organique, 7,8 % d'azote à libération lente et les 0,9 % restant d'azote uréique.

6. Procédé selon la revendication 1, **caractérisé en ce que** la fibre organique est une fibre d'écorce.

7. Procédé selon la revendication 1, **caractérisé en ce que** la fibre organique est une fibre de toile de jute, ladite fibre étant mélangée à de l'eau dans un pulpeur afin de créer une pâte de dispersion d'eau, ladite pâte de dispersion d'eau étant étalée sur une courroie perforée, les récipients de semis devant être formés à ce moment-là, sur ladite courroie perforée mobile, ladite pâte libérant de l'eau afin de fournir un produit intermédiaire comprenant environ 40 % d'eau résiduelle, correspondant à environ 60 % de toile de jute, en déplaçant continuellement ladite courroie perforée mobile tout en y ajoutant le méthylène-urée à l'aide d'un embout ou d'un applicateur, le méthylène-urée ayant un rapport molaire U:F de 1:0,6, un résidu sec de 70 % et étant mélangé juste avant utilisation avec de l'acide phosphorique à 35 % dans un ratio de 100 g de liquide méthylène-urée et 3 g de solution d'acide phosphorique, pour créer un mélange catalysé, ledit mélange catalysé étant vaporisé sur le produit intermédiaire immédiatement après l'opération de vaporisation ou de dépôt, ladite courroie étant amenée à passer dans un four à 150 °C où ladite pâte est encore séchée, libérant à nouveau de l'eau pour fournir un produit final comprenant une humidité résiduelle totale de 2 %, fournissant de ce fait des récipients rigides, légers et résistants aux impacts, contenant 4,0 % d'azote total, parmi lesquels 3,6 % sont constitués d'azote à libération lente et le reste est constitué de 0,4 % d'azote uréique.

8. Récipient de semis fabriqué grâce à un procédé selon l'une ou plusieurs des revendications 1 à 7, **caractérisé en ce que** le récipient de semis est fourni par ladite courroie perforée qui comprend une multitude de perforations dont la forme et la taille sont telles que le récipient de semis a une forme de parallélépipède, d'une taille jusqu'à 600 mm de long, jusqu'à 400 mm de large et jusqu'à 160 mm de haut, avec une lucule ou un nombre de puits compris entre 1 et 680 (34 x 20), ladite lucule ayant une portion avant soit fermée, soit ouverte, et une multitude de trous de tailles différentes.

9. Récipient de semis selon la revendication 8, **caractérisé en ce que** le récipient de semis est fourni par ladite courroie perforée qui comprend une multitude de perforations dont la forme et la taille sont telles que le récipient de semis a une forme de plateau avec des bords périphériques surélevés, sans éléments internes de séparation, lesdits récipients de semis ayant une taille jusqu'à 600 mm de long, jusqu'à 400 mm de large, jusqu'à 160 mm de hauteur externe et jusqu'à 145 mm de hauteur interne, les portions basses de ces récipients de semis étant ou non équipées de trous traversant.

10. Récipient de semis selon la revendication 8, **caractérisé en ce que** le récipient de semis est fourni par ladite courroie perforée qui comprend une multitude de perforations dont la forme et la taille sont telles que le récipient de semis a une forme de plateau plat, sans bords périphériques surélevés, où une sous-couche de culture est supportée, lesdits récipients de semis ayant une taille jusqu'à 600 mm de long, jusqu'à 400 mm de large, jusqu'à 160 mm de haut, et une portion basse équipée ou non de trous traversant.

11. Procédé selon l'une quelconque des revendications 1 à 7, **caractérisé en ce que** le méthylène-urée et/ou le méthylol-urée est ajouté audit récipient fini à l'aide d'un appareil équipé d'un embout applicateur.

12. Récipient de semis pour semis et plantes selon les revendications 8 à 10, **caractérisé en ce que** ledit récipient de semis est un pot de fleurs.
